# FASCICULE DE BREVET EUROPEEN

(11) **EP 2 831 425 B1**
(45) Date de publication et mention de la délivrance du brevet: **24.06.2020**
(21) Numéro de dépôt: 13715359.9
(22) Date de dépôt: 21.03.2013
(51) Int. Cl.: F04D 29/32, F04D 29/38, F04D 29/54, F01D 5/00, F01D 5/14, F01D 5/28, F01D 25/28

(54) **PROCÉDÉ DE DÉMONTAGE D'UN RENFORT D'UNE PIÈCE**
VERFAHREN ZUR DEMONTAGE EINER VERSTÄRKUNG AUS EINEM TEIL
METHOD FOR DISASSEMBLING A REINFORCEMENT FROM A PART

(30) Priorité: 28.03.2012 FR 1252805
(43) Date de publication de la demande: 04.02.2015
(73) Titulaire: Safran Aircraft Engines, 75015 Paris (FR)
(72) Inventeur: TELLIER, Florian, 77550 Moissy Cramayel Cedex (FR); PAIXAO, Adrien, 77550 Moissy Cramayel Cedex (FR)
(74) Mandataire: Ernest Gutmann - Yves Plasseraud S.A.S.
(86) Numéro de dépôt international: PCT/FR2013/050601
(87) Numéro de publication internationale: WO 2014/001662

(56) Documents cités:
- US-A- 3 132 550
- US-A1- 2010 104 461

## Description

L'invention concerne un procédé de démontage d'un renfort d'une pièce, tel qu'une aube de turbomachine, ainsi qu'un outillage permettant la mise en œuvre d'un tel procédé.

Afin de réduire le poids et le coût de certaines aubes de turbomachine, et en particulier de celles d'un aubage redresseur de flux secondaire, on réalise en général ces aubes en matériau composite. Comme ces aubes doivent résister à l'usure par érosion et à des chocs importants, du fait de l'écoulement et du frottement de l'air et de molécules d'eau ainsi que des impacts de particules ou de corps étrangers susceptibles de pénétrer dans le moteur, on les protège, au niveau de leurs bords d'attaque, par des renforts métalliques fixés sur les pales des aubes.

Un aubage redresseur du flux secondaire d'une turbomachine comporte deux viroles annulaires coaxiales, respectivement interne et externe, entre lesquelles s'étendent des aubes sensiblement radiales. Chacune de ces aubes a une cambrure qui n'est pas constante sur toute sa hauteur ou dimension radiale par rapport à l'axe longitudinal de l'aubage, si bien que le profil de son bord d'attaque peut varier le long de sa hauteur. Le bord d'attaque de chaque aube d'un aubage redresseur de certains moteurs peut par exemple présenter sept profils différents dans un cas particulier de réalisation.

Dans la technique actuelle, le bord d'attaque d'une aube de ce type peut être renforcé au moyen d'un renfort métallique qui est rapporté et collé sur le bord longitudinal amont de la pale de l'aube. Cependant, cette technologie présente des inconvénients. En effet, l'étape de collage est relativement longue et s'ajoute aux différentes étapes de fabrication d'une aube. De plus, il est difficile de contrôler la qualité et la fiabilité du collage si bien que le risque de décollement d'un renfort existe, ce qui peut s'avérer dangereux en fonctionnement.

Par ailleurs, en cas d'usure ou de choc, le renfort d'une aube peut être retiré et remplacé par un neuf lors d'une opération de maintenance. Cependant, du fait que le renfort collé est du type indémontable, il est nécessaire de le détruire pour le retirer, lors d'une opération longue et délicate qui peut entraîner une détérioration de la pale. Du fait du niveau d'endommagement non maîtrisable de la pale lors de cette opération et des conditions de polymérisation de la colle qui affectent la santé matière de la pale lors du collage, on limite le nombre de réparations du renfort d'une aube au cours de sa durée de vie.

Le document US2010/0104461 divulgue une pale de ventilateur comportant plusieurs parties assemblées.

Le document US3135550 divulgue un outillage formant une pince.

L'invention a pour but d'apporter une solution simple, efficace et économique à ces problèmes de la technique antérieure.

L'invention se rapporte en particulier à une aube de turbomachine, comprenant une pale et au moins un renfort d'un bord de la pale, en particulier de son bord d'attaque et/ou de son bord de fuite, le ou chaque renfort recouvrant ou formant le bord précité de la pale et s'étendant sensiblement sur toute la dimension longitudinale de ce bord, caractérisée en ce que le renfort est fixé de manière amovible sur la pale et comprend des moyens d'encliquetage élastique coopérant avec des moyens complémentaires de la pale.

Le bord renforcé de la pale peut être son bord d'attaque, son bord de fuite, voire un autre bord de la pale tel qu'un bord en sommet de pale.

Le renfort est ainsi fixé sur la pale de l'aube par encliquetage élastique, ce qui autorise son démontage, par exemple pour le remplacer par un neuf lors d'une opération de maintenance, cette opération étant plus simple et moins longue que dans la technique antérieure. Une aube selon l'invention peut subir plusieurs interventions de remplacement de son renfort au cours de sa durée de vie, sans risque de l'endommager, ce qui est plus économique que la technique antérieure. De plus, l'étape de collage de la technique antérieure, dont la fiabilité est incertaine, n'est pas utilisée, ce qui supprime les inconvénients précités liés à l'emploi d'une colle.

Selon une autre caractéristique de l'invention, le renfort est formé par un profil allongé en forme de rail à section sensiblement en U, en V ou en C, et comporte sur sa surface interne des moyens formés en saillie ou en creux et coopérant avec des moyens de forme sensiblement complémentaire de la pale, pour maintenir le renfort sur la pale. Lors de l'encliquetage élastique, l'ouverture du profil est destinée à s'agrandir, ce qui crée des déformations élastiques du renfort en particulier au niveau de sa partie médiane.

Le renfort peut être du type comprenant deux parois latérales reliées entre elles par une paroi médiane définissant le bord précité de la pale. Lors du montage du profil, les parois latérales sont destinées à s'écarter l'une de l'autre pour autoriser l'engagement des moyens d'encliquetage dans les rainures de la pale. Chaque paroi latérale peut comporter sur sa surface interne un ou plusieurs rebords longitudinaux ou ergots engagés dans des rainures longitudinales ou des orifices de la pale. Chaque paroi latérale peut comporter deux rebords de ce type pour pallier le risque de rupture d'un ou de ces rebords en fonctionnement.

Dans un mode de réalisation de l'invention, le bord longitudinal libre de chaque paroi latérale est replié vers l'intérieur et vers la paroi médiane, et définit un des rebords longitudinaux précités.

En variante, chaque rebord longitudinal est incliné par rapport à une normale à la paroi latérale correspondante, vers l'intérieur et vers la paroi médiane.

Avantageusement, la ou chaque rainure longitudinale située du côté de l'intrados de la pale est décalée vers l'amont ou vers l'aval par rapport à une rainure longitudinale située du côté de l'extrados de la pale. Les rainures situées d'un côté de la pale ne sont donc pas situées en vis-à-vis de celles situées de l'autre côté de la pale (par rapport à un plan médian passant par l'axe longitudinal de la pale), ce qui limite l'affaiblissement mécanique de la pale et réduit le risque d'amorçage de fissures entre les rainures.

Le bord précité de la pale peut comprendre une structure fibreuse dans laquelle sont formés les orifices ou les rainures ou qui délimitent avec le reste de la pale ces orifices ou rainures. Dans le cas où la pale n'est pas formée d'une structure fibreuse, la structure fibreuse précitée peut être rapportée et fixée sur le bord longitudinal amont ou aval de la pale par toute technique appropriée. Dans le cas où la pale comprend une structure fibreuse, la structure fibreuse précitée peut être formée par la structure fibreuse de la pale. Ce type de structure fibreuse est destiné à être imprégné d'une résine appropriée destinée à combler les vides inter-fibres et à lier les fibres entre elles.

Dans un exemple de réalisation de l'invention, au moins l'une des parois latérales du renfort comprend un orifice ou un espace, tel qu'une encoche, débouchant vers l'extérieur, pour l'engagement d'un outil de démontage du renfort.

De préférence, les jeux de montage entre le renfort et la pale sont comblés au moins en partie par un joint ou un revêtement, sous forme de film de revêtement ou de peinture par exemple, qui recouvre au moins une partie de la surface de la pale destinée à être recouverte par le renfort.

L'invention se rapporte également à un aubage redresseur de flux secondaire d'une turbomachine, comportant deux viroles annulaires coaxiales, respectivement interne et externe, entre lesquelles s'étendent des aubes sensiblement radiales, caractérisé en ce que les aubes sont telles que définies ci-dessus.

L'invention concerne un procédé de démontage d'un renfort d'une pièce, ledit renfort étant fixé de manière amovible sur la pièce et comprenant des moyens d'encliquetage élastique coopérant avec des moyens complémentaires de la pièce, le procédé comprenant les étapes consistant à :
- fixer au moins une pointe métallique sur une paroi latérale du renfort et au moins une autre pointe métallique sur l'autre paroi latérale du renfort, ces pointes s'étendant sensiblement perpendiculairement aux parois latérales sur lesquelles elles sont fixées,
- éloigner les pointes l'une de l'autre pour écarter les parois latérales du renfort et désengager leurs moyens d'encliquetage des moyens complémentaires de la pale, et
- retirer le renfort de la pale.

L'invention peut donc être appliquées à tout type de pièce comportant un renfort amovible, et n'est pas limitée à la seule application d'une aube de turbomachine.

Avantageusement, les pointes sont fixées sur le renfort par soudage en surface, les pointes étant utilisées comme électrodes pour le soudage lors duquel au moins un arc électrique est destiné à être généré entre le renfort et l'extrémité de chaque pointe pour faire fondre cette extrémité ou un métal d'apport, le métal de fusion assurant la fixation de la pointe sur le renfort. Le soudage est par exemple du type MIG-TIG-MAG (*Métal Inert Gas* - *Tungsten Inert Gas* - *Metal Active Gas*) ou SAEE (*soudage à l'arc à l'électrode enrobée*). Ce procédé de soudage est réalisé localement et en surface, ce qui n'endommage pas la structure composite par élévation de température.

Les pointes peuvent être respectivement fixées aux extrémités des deux branches d'une pince qui est utilisée pour écarter les pointes l'une de l'autre.

De préférence, la pièce est une aube de turbomachine, comprenant une pale et au moins un renfort d'un bord de la pale, en particulier de son bord d'attaque et/ou de son bord de fuite de la pale, le ou chaque renfort recouvrant ou formant le bord précité de la pale et s'étendant sensiblement sur toute la dimension longitudinale de ce bord, le renfort étant fixé de manière amovible sur la pale et comprenant des moyens d'encliquetage élastique coopérant avec des moyens complémentaires de la pale.

L'invention concerne également un outillage pour la mise en œuvre du procédé précité, caractérisé en ce qu'il comprend un outil en forme de pince, comportant des branches dont les extrémités libres portent des pointes destinées à être fixées par soudage aux parois latérales du renfort, chaque pointe étant reliée par un conducteur à une borne d'une source électrique.

De préférence, les pointes sont fixées de manière amovible sur les branches de l'outil.

Dans ce cas, chaque branche de l'outil peut comporter une extrémité cylindrique comportant un alésage axial dans lequel est engagé le corps d'une pointe.

Avantageusement, chaque extrémité cylindrique comporte un orifice taraudé débouchant à l'intérieur de l'alésage et dans lequel est montée une vis de blocage axial de la pointe dans cet alésage.

Selon une caractéristique de l'invention, les pointes sont réalisées en matériau fusible.

L'invention sera mieux comprise et d'autres détails, avantages et caractéristiques de l'invention apparaîtront plus clairement à la lecture de la description suivante faite à titre d'exemple non limitatif et en référence aux dessins annexés, dans lesquels :
- la figure 1 est une vue schématique partielle en perspective d'un aubage redresseur de flux secondaire d'une turbomachine ;
- la figure 2 est une vue schématique en perspective d'un profil de renfort d'un bord d'une aube ;
- la figure 3 est une vue schématique en perspective d'une aube sur le bord d'attaque de laquelle est monté le profil de renfort de la figure 2 ;
- la figure 4 est une vue schématique en coupe transversale du bord d'attaque de l'aube de la figure 3 ;
- la figure 5 est une vue correspondant à celle de la figure 4 et représentant une variante de réalisation;
- la figure 6 est une vue schématique en perspective d'un autre profil de renfort d'un bord d'une aube ;
- la figure 7 est une vue schématique partielle en perspective d'une aube sur le bord d'attaque de laquelle est monté le profil de renfort de la figure 6, et illustre une étape d'un procédé de démontage de ce profil de renfort au moyen d'un outil ;
- la figure 8 est une vue schématique en perspective d'un autre profil de renfort d'un bord d'une aube ;
- la figure 9 est une vue schématique partielle en perspective d'une aube sur le bord d'attaque de laquelle est monté le profil de renfort de la figure 8 ;
- la figure 10 est une vue schématique en coupe transversale du bord d'attaque de l'aube de la figure 9 ;
- les figures 11 et 12 sont des vues correspondant à la figure 10 et illustrant des variantes de réalisation; et
- les figures 13 et 14 sont des vues schématique en perspective d'une aube et d'une pince de démontage du profil de renfort de cette aube après soudage de pointes, et illustrent des étapes du procédé de démontage de ce profil de renfort, conformément à l'invention.

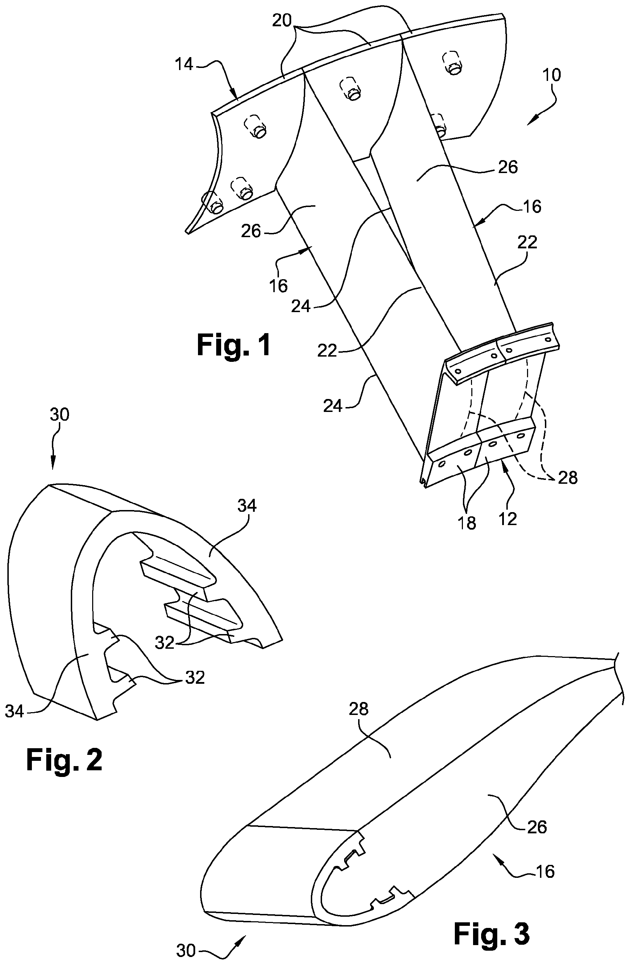

On se réfère d'abord à la figure 1 qui représente une partie d'un aubage 10 redresseur du flux secondaire d'une turbomachine à double flux et en particulier d'un turboréacteur à double flux.

Cet aubage redresseur 10 comprend deux viroles annulaires coaxiales, respectivement interne 12 et externe 14, s'étendant l'une à l'intérieur de l'autre et reliées entre elles par des aubes 16 sensiblement radiales. Dans l'exemple représenté, chacune des aubes 16 est reliée à son extrémité radialement interne à une plate-forme interne 18 formant un secteur de la virole interne 12 et son extrémité radialement externe est libre et destinée à être montée entre deux plates-formes externes 20 adjacentes formant des secteurs de la virole externe 14.

Chaque aube 16 comprend une pale comportant un bord amont 22 d'attaque et un bord aval 24 de fuite des gaz du flux secondaire. Chaque aube 16 a une forme incurvée et comprend un intrados 26 et un extrados 28. La cambrure des aubes 16 peut varier le long de leur hauteur ou dimension radiale (par rapport à l'axe longitudinal de l'aubage).

Afin que les bords d'attaque 22 des aubes 16 résistent à l'usure et aux chocs, on les recouvre par des renforts métalliques rapportés et fixés par collage sur les pales des aubes, en particulier lorsque ces aubes sont réalisées en matériau composite.

Cependant, la technologie de fixation de ces renforts sur les pales des aubes présente des inconvénients décrits plus haut.

Il est possible de remédier à ces problèmes grâce à la fixation amovible et sans collage des renforts sur les pales des aubes, chaque renfort comportant des moyens d'encliquetage élastique coopérant avec des moyens complémentaires portés par ou formés sur la pale d'une aube. Dans le cas où le renfort est destiné à protéger le bord d'attaque de la pale, il est monté sur le bord d'attaque ou bord longitudinal amont de la pale, et dans le cas où il est destiné à protéger le bord de fuite de la pale, il est monté sur le bord de fuite ou bord longitudinal aval de la pale. Il peut être utilisé pour renforcer un autre bord de la pale tel qu'un bord en sommet de pale.

Le renfort est constitué d'un profil en forme de rail qui a une forme allongée et a une section en U, en V ou en C, et qui est destiné à être monté par encliquetage élastique sur le bord d'attaque 22 ou de fuite 24 d'une aube 16.

Dans un premier mode de réalisation représenté aux figures 2 à 4, le profil 30 comporte deux parois latérales 34 destinées à recouvrir une partie de l'intrados 26 de la pale et une partie de l'extrados 28 de la pale, respectivement, ces parties latérales 34 étant reliées l'une à l'autre par une partie médiane de forme incurvée qui recouvre le bord d'attaque de la pale. Les parois latérales 34 portent des moyens d'encliquetage élastique qui sont formés en saillie sur les surfaces internes en regard des parois 34. Chaque paroi 34 comprend sur sa surface interne deux rebords ou nervures longitudinales 32 qui sont parallèles entre eux et s'étendent vers l'intérieur en direction de la paroi latérale opposée.

Le profil 30 peut être en acier inoxydable et réalisé par usinage d'une pièce ou obtenu de fonderie. Bien que le profil 30 représenté dans les dessins ait une orientation générale rectiligne, il peut avoir une forme incurvée voire vrillée pour se conformer à la forme du bord d'attaque de la pale.

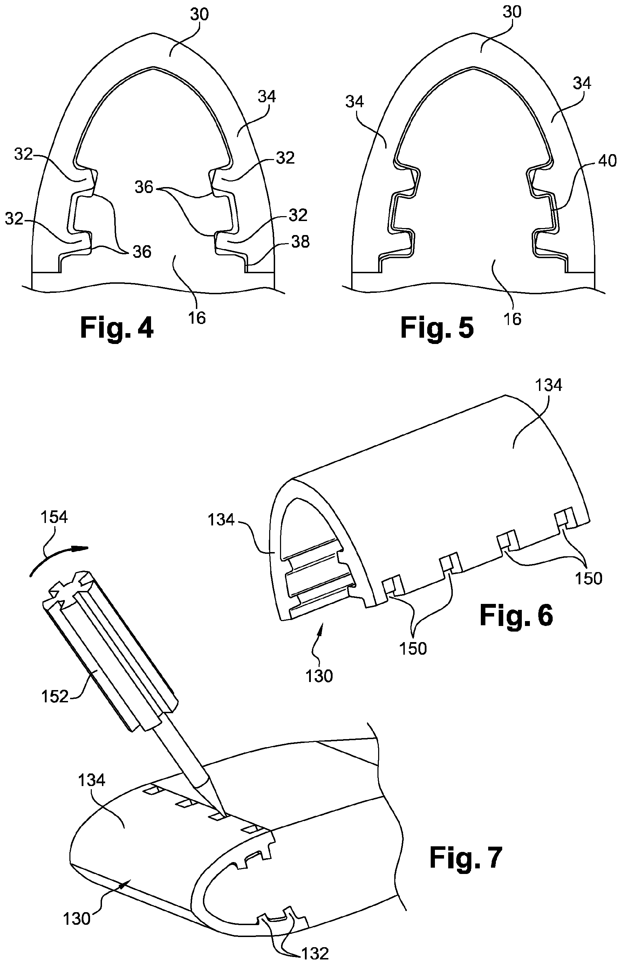

L'intrados 26 et l'extrados 28 de la pale de l'aube 16 comprennent chacun deux rainure longitudinales 36 d'encliquetage élastique d'un rebord ou d'une nervures longitudinale 32 du profil 30. La pale comprend en outre sur son bord longitudinal amont un léger renfoncement 38 de logement du profil 30. L'épaisseur de ce renfoncement 38 (de l'ordre de 0,1mm par exemple) est sensiblement égale à l'épaisseur du profil 30 de façon à ce que la surface externe du profil soit alignée avec l'intrados 26 et l'extrados 28 de la pale, comme cela est représenté aux figures 3 et 4.

Comme cela est visible en figure 4, chaque nervure 32 est inclinée par rapport à une normale à la surface interne de la paroi 34 correspondante (cette normale passant sensiblement par la base de cette nervure), vers la paroi médiane, c'est-à-dire vers l'amont dans l'exemple représenté. Les nervures ont ainsi des formes qui empêchent un démontage accidentel du renfort de la pale.

Dans l'exemple représenté, les nervures 32 sont inclinées par rapport aux parois latérales des rainures 36. En variante, les nervures pourraient s'étendre parallèlement aux parois latérales des rainures.

Les rainures 36 ont des formes qui ne sont pas parfaitement complémentaires de celles des nervures 32 si bien que des jeux résiduels existent au montage entre le profil 30 et la pale (figure 4).

Ces jeux peuvent être comblés, au moins en partie, au moyen d'un joint (par exemple en silicone) de forme approprié ou d'un revêtement déposé sur les surfaces de la pale destinées à être recouvertes par le profil 30. De plus, les rainures 36 coté intrados 26 et côté extrados 28 ne sont avantageusement pas alignées en vis à vis pour réduire le risque d'amorçage de fissures entre ces rainures.

Dans l'exemple de réalisation de la figure 5, toutes les surfaces de la pale destinées à être recouvertes par le profil 30 sont recouvertes par un film 40 (par exemple de polyuréthane) ou une peinture, le film ou la peinture étant destiné à protéger le matériau de la pale et/ou à absorber l'énergie liée à l'impact de particules sur le bord d'attaque de l'aube. En variante, seules certaines surfaces de la pale peuvent être recouvertes de ce type de film ou peinture, et par exemple les surfaces internes des rainures 36. Dans une autre variante, les jeux précités sont comblés au moins en partie par des pièces, par exemple en silicone, rapportées entre le profil 30 et la pale.

Les espaces s'étendant entre les bords longitudinaux aval des parois latérales 34 du profil 30 et l'intrados 26 et l'extrados 28 de la pale sont de préférence comblés avec un matériau du type précité pour assurer une continuité du profil aérodynamique de la pale, ce matériau étant de préférence résistant à l'usure et à l'érosion.

Le profil 30 est monté sur le bord d'attaque 22 de la pale par encliquetage élastique en déplaçant le profil vers la pale, depuis l'amont, dans une direction sensiblement perpendiculaire à l'axe longitudinal de l'aube. Dans le cas où l'aube fait partie d'un aubage tel que celui représenté en figure 1, un renfort est rapporté sur la pale de chaque aube, ces aubes pouvant être déjà reliées aux plates-formes interne 12 et externe 14.

La figure 6 représente une autre variante de réalisation, dans laquelle le profil 130 de renfort diffère de celui précédemment décrit en ce qu'il comprend en outre des encoches 150 sur les bords longitudinaux libres de ses parois latérales 134.

Dans l'exemple représenté, chaque paroi latérale 134 du profil comprend quatre encoches 150 (qui pourraient être plus ou moins nombreuses) qui sont régulièrement espacées les unes des autres le long du bord longitudinal de cette paroi. Ces encoches 150 débouchent vers l'extérieur sur les surfaces externes des parois latérales, et vers l'intérieur sur leurs surfaces internes. La section du débouché extérieur de chaque encoche 150 est inférieure à la section du débouché inférieur de cette encoche.

Ces encoches 150 ont pour fonction de faciliter le démontage du profil 130 en autorisant l'engagement d'un outil 152, tel qu'une pointe ou un tournevis (figure 7), dans cette encoche. L'outil 152 est ainsi engagé entre le bord longitudinal libre d'une paroi latérale 134 du profil et la pale, comme représenté en figure 7. Au moins une partie de l'outil 152 peut être recouvert de silicone pour éviter d'endommager l'aube. L'outil est utilisé comme levier pour déformer légèrement le profil de façon à désengager les nervures 132 des rainures de la pale et autoriser le retrait du profil. Pour cela, l'extrémité de l'outil, opposée à la pointe, est déplacée vers l'aval, c'est-à-dire du côté du bord de fuite de l'aube (flèche 154), jusqu'à ce que l'outil prenne appui sur l'intrados ou l'extrados de l'aube et que sa pointe s'engage sous la paroi latérale 134 et la soulève en l'écartant de la pale. Le profil 130 peut alors être retiré par translation vers l'amont.

Les encoches 150 peuvent être comblées par un matériau approprié qui doit être retiré pour autoriser l'insertion de l'outil dans ces encoches.

En variante, un autre outil de démontage destiné à s'engager dans au moins deux encoches 150 du profil pourrait être utilisé.

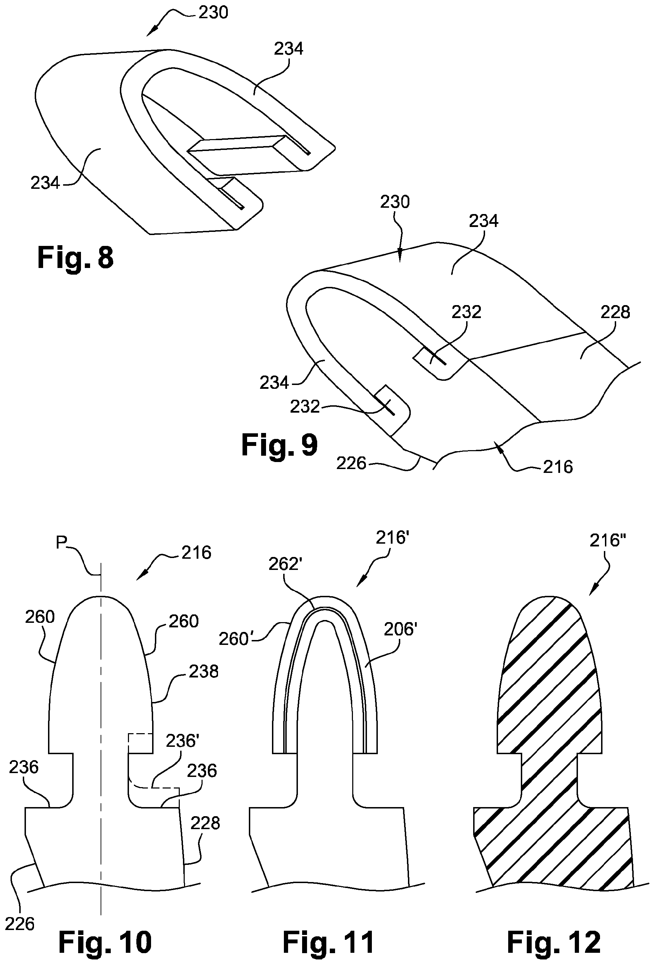

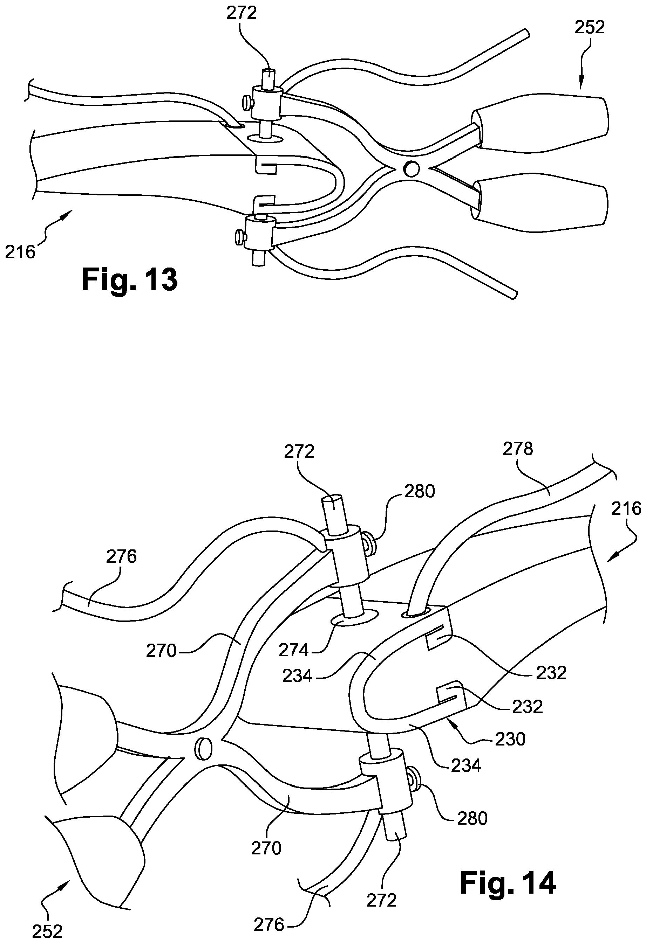

Un procédé de démontage d'un profil selon l'invention sera décrit dans le détail dans ce qui suit, en référence aux figures 13 et 14, ce profil étant représenté aux figures 8 et 9. Cet autre procédé de démontage peut être utilisé pour démonter le renfort des figures 2 à 5.

Le profil 230 des figures 8 et 9 diffère de celui décrit en référence aux figures 2 à 4, notamment en ce que ses moyens d'encliquetage élastique sont formés par les bords longitudinaux libres de ses parois latérales 234 qui sont repliés vers l'intérieur et vers la paroi médiane de façon à ce que les parties d'extrémité longitudinale de ces parois aient en section une forme sensiblement en U. Chaque bord plié précité forme un rebord 232 qui est rabattu sur la surface interne d'une paroi latérale de façon à former une surépaisseur longitudinale au niveau de la partie d'extrémité libre de chaque paroi latérale.

Les rebords 232 sont destinés à être engagés par encliquetage élastique dans des rainures longitudinales 236 de la pale, formées respectivement du côté de l'intrados 226 et de l'extrados 228 de la pale.

Le profil 230 peut être réalisé à partir d'une tôle métallique qui est pliée à chaud ou à froid. Ce profil peut avoir une forme incurvée voire vrillée pour se conformer à la forme de la pale de l'aube 216.

L'intrados 226 et l'extrados 228 de la pale de l'aube 216 comprennent chacun une rainure longitudinale 236 d'encliquetage élastique d'un rebord 232 du profil 230 (figure 10). La pale comprend en outre sur son bord longitudinal amont un renfoncement 238 de logement du profil 230, l'épaisseur de ce renfoncement 238 étant sensiblement égale à l'épaisseur du profil 230, comme expliqué dans ce qui précède.

Les rainures 236 de la pale peuvent être disposées en vis-à-vis l'une de l'autre par rapport à un plan médian P passant sensiblement par l'axe longitudinal de l'aube (figure 10). Toutefois, ces rainures sont de préférence décalées axialement l'une par rapport à l'autre (comme cela est représenté en traits pointillés en figure 10 avec la rainure 236' du côté extrados 228 qui est décalée vers l'amont par rapport à la rainure 236 du côté intrados 226), de façon à limiter l'affaiblissement métallique de la pale du fait de la faible épaisseur de matière, en direction transversale, entre ces rainures et à limiter les risques d'apparition de fissures entre ces rainures.

Les rainures 236, 236' de la pale ont ici des formes sensiblement complémentaires de celles des rebords 32 du profil 230. Toutefois, dans le cas où des jeux apparaîtraient au montage entre le profil et la pale, ces jeux pourraient être comblés, au moins en partie, comme expliqué dans ce qui précède.

Le profil 30 est monté sur le bord d'attaque 22 de la pale par encliquetage élastique en déplaçant le profil vers la pale, depuis l'amont, dans une direction sensiblement perpendiculaire à l'axe longitudinal de l'aube.

Pour cela, les parois latérales 234 du profil peuvent être écartées l'une de l'autre lors du montage au moyen d'un outil approprié, ou peuvent s'écarter automatiquement l'une de l'autre lors de leur déplacement vers la pale par glissement de leurs rebords 232 sur des surfaces incurvées convexes 260 des parties d'extrémité amont de la pale.

Dans l'exemple de réalisation de la figure 10, la pale de l'aube 216 est réalisée d'une seule pièce qui comporte à son extrémité amont les surfaces 260 de glissement précitées. Cette extrémité amont de la pale a en section une forme de champignon dont la base de plus faible épaisseur en direction transversale représente la zone où sont situées les rainures 236 de réception des rebords 232 du profil 230.

Dans la variante représentée en figure 11, l'extrémité amont de la pale de l'aube 216' a en section une forme d'ogive dont la partie d'extrémité amont est recouverte par une structure fibreuse 262' qui définit les surfaces 260' de glissement précitées. Cette structure fibreuse 262' a en section une forme en U ou en V et est engagée sur l'extrémité amont de la pale. Au montage, les rebords 232 du profil sont destinés à s'engager par retour élastique en aval des extrémités aval de la structure fibreuse, qui forment des moyens de retenue axiale du profil 230 sur la pale.

La technologie de la figure 11 permet par exemple de modifier des pales existantes de la technique antérieure pour qu'elles puissent recevoir des profils 230 selon l'invention. Les bords longitudinaux amont de ces pales sont usinés et reçoivent chacun une structure fibreuse du type précité destinée à définir les rainures de logement des moyens d'encliquetage des profils. En variante, il serait possible d'obtenir l'aube de la figure 11 en une seule opération au moyen d'un ou plusieurs préimprégnés drapés sur l'ensemble de la structure avant cuisson.

Dans la variante de la figure 12, la pale de l'aube 216" diffère de celle de la figure 10 en ce que son matériau est formé d'une structure fibreuse.

Les structures fibreuses des pales des figures 11 et 12 peuvent être obtenues par tissage de fibres, telles que des fibres de carbone, de verre, de kevlar, céramiques, etc. Ces fibres sont destinées à être imprégnées d'une résine pour assurer la liaison des fibres entre elles.

Les figures 13 et 14 représentent des étapes d'un procédé de démontage du profil 230 de la pale d'une aube 216, au moyen d'un outil 252 en forme de pince dont les extrémités libres des branches 270 portent des pointes 272 destinées à être fixées par soudage aux deux parois latérales 234 du profil, respectivement. Le soudage des pointes est réalisé localement en surface sans dégrader le renfort et la pale.

Les pointes 272 sont au nombre de deux (mais pourraient être plus nombreuses). Dans l'exemple représenté, chaque pointe 272 s'étend sensiblement perpendiculairement à la paroi latérale 234 sur laquelle elle est fixée, les pointes étant sensiblement parallèles entre elles dans l'exemple représenté. Chaque pointe 272 est fixée à l'extrémité d'une branche 270 de l'outil 252 et a une extrémité fixée par soudage à une paroi latérale 234.

Dans l'exemple représenté, les pointes 272 sont fixées de manière amovible sur les branches 270 de l'outil 252, chaque branche comportant une extrémité cylindrique comportant un alésage axial dans lequel est engagé le corps d'une pointe. Chaque extrémité cylindrique comporte un orifice taraudé débouchant à l'intérieur de l'alésage et dans lequel est montée une vis 280 de blocage axial de la pointe 272 dans cet alésage.

Les pointes 272 sont réalisées en matériau fusible et sont utilisées comme électrodes lors du soudage, qui est par exemple du type MIG-TIG-MAG ou SAEE. Lors de ce type de soudage, un arc électrique est généré entre l'extrémité de chaque pointe 272 et la paroi latérale 234, l'énergie de cet arc étant destinée à faire fondre l'extrémité de la pointe dont le métal de fusion 274 est destiné, après refroidissement et solidification, à assurer la fixation de la pointe sur la paroi latérale. Pour cela, chaque pointe 272 est reliée par un conducteur 276 à une borne (+) d'une source électrique, et le profil 230 est relié par un conducteur 278 à la borne (-) opposée de cette source électrique.

Le démontage du profil 230 peut être réalisé comme suit. Le profil 230 est relié par le conducteur 278 à la borne (-) de la source électrique. Les pointes 272 sont fixées aux branches 270 de l'outil 252, qui sont elles mêmes reliées à la borne (+) de la source électrique. Les branches de l'outil et les pointes sont écartées l'une de l'autre par manipulation de l'outil. L'aube 216 est engagée entre les branches de l'outil qui sont rapprochées l'une de l'autre jusqu'à ce que les extrémités des pointes affleurent les surfaces externes des parois latérales 234 du profil. Un arc électrique est généré entre chaque pointe 272 et le profil 230 de façon à souder les pointes sur le profil, comme indiqué précédemment. On peut activer le courant pour le soudage soit par un bouton positionné sur la pince et accessible par l'opérateur, soit par l'intermédiaire d'une unité de contrôle déportée. Les branches de l'outil sont écartées l'une de l'autre, ce qui provoque la déformation élastique du profil par écartement de ces parois latérales l'une de l'autre, jusqu'à ce que ses rebords 232 soient désengagés des rainures de la pale. L'outil 252 est alors déplacé en translation du côté opposé à l'aube pour retirer le profil de la pale.

Ce procédé et ce dispositif de démontage peuvent être utilisés pour démonter les profils représentés aux figures 2 à 9.

Dans une autre variante non représentée, le profil a une épaisseur variable. Sa paroi latérale située du côté de l'intrados de la pale peut par exemple avoir une épaisseur plus importante que celle de la paroi latérale du côté de l'extrados de la pale, de façon à tenir compte des différences de pression exercée sur ces parois en fonctionnement. Plus une paroi latérale du profil est épaisse, plus elle est rigide, et plus elle résiste aux déformations (telles que des décollements).

L'invention peut être appliquée à des aubes autres que celles d'un aubage redresseur de flux secondaire, et par exemple à des aubes d'une soufflante de turbomachine. De même, l'invention n'est pas limitée au domaine des aubes de turbomachine.

## Revendications

1. Procédé de démontage d'un renfort (230) d'une pièce (216), ledit renfort (230) étant fixé de manière amovible sur la pièce (216) et comprenant des moyens (232) d'encliquetage élastique coopérant avec des moyens (236) complémentaires de la pièce (216), le procédé comprenant les étapes consistant à :
- fixer au moins une pointe métallique (272) sur une paroi latérale (234) du renfort (230) et au moins une autre pointe métallique (272) sur l'autre paroi latérale (234) du renfort (230), ces pointes (272) s'étendant sensiblement perpendiculairement aux parois latérales (234) sur lesquelles elles sont fixées,
- éloigner les pointes (272) l'une de l'autre pour écarter les parois latérales (234) du renfort (230) et désengager leurs moyens (232) d'encliquetage des moyens complémentaires (236) de la pièce, et
- retirer le renfort (230) de la pièce (216).

2. Procédé de démontage selon la revendication 1, **caractérisé en ce que** les pointes (272) sont fixées sur le renfort (230) par soudage, les pointes (272) étant utilisées comme électrodes pour le soudage lors duquel au moins un arc électrique est destiné à être généré entre le renfort (230) et l'extrémité de chaque pointe (272) pour faire fondre cette extrémité ou un métal d'apport, le métal de fusion (274) assurant la fixation de la pointe (272) sur le renfort (230).

3. Procédé de démontage selon la revendication 1 ou 2, **caractérisé en ce que** les pointes (272) sont respectivement fixées aux extrémités des deux branches (270) d'une pince (252) qui est utilisée pour écarter les pointes (272) l'une de l'autre.

4. Procédé de démontage selon l'une des revendications 1 à 3, **caractérisé en ce que** la pièce est une aube (216) de turbomachine, comprenant une pale et au moins un renfort (230) d'un bord de la pale, en particulier de son bord d'attaque et/ou de son bord de fuite de la pale, le ou chaque renfort (230) recouvrant ou formant le bord précité de la pale et s'étendant sensiblement sur toute la dimension longitudinale de ce bord, le renfort (230) étant fixé de manière amovible sur la pale et comprenant des moyens (232) d'encliquetage élastique coopérant avec des moyens (236) complémentaires de la pale.

5. Outillage pour la mise en oeuvre du procédé selon l'une des revendications 2 à 4, **caractérisé en ce qu'**il comprend un outil (252) en forme de pince, comportant des branches (270) dont les extrémités libres portent des pointes (272) destinées à être fixées par soudage aux parois latérales (234) du renfort (230), chaque pointe (272) étant reliée par un conducteur (276) à une borne d'une source électrique.

6. Outillage selon la revendication 5, **caractérisé en ce que** les pointes (272) sont fixées de manière amovible sur les branches (270) de l'outil (252).

7. Outillage selon la revendication 6, **caractérisé en ce que** chaque branche (270) de l'outil (252) comporte une extrémité cylindrique comportant un alésage axial dans lequel est engagé le corps d'une pointe (272).

8. Outillage selon la revendication 7, **caractérisé en ce que** chaque extrémité cylindrique comporte un orifice taraudé débouchant à l'intérieur de l'alésage et dans lequel est montée une vis (280) de blocage axial de la pointe (272) dans cet alésage.

9. Outillage selon l'une des revendications 5 à 8, **caractérisé en ce que** les pointes (272) sont réalisées en matériau fusible.

## Patentansprüche

1. Verfahren zur Demontage einer Verstärkung (230) von einem Bauteil (216), wobei die Verstärkung (230) abnehmbar an dem Bauteil (216) befestigt ist und elastische Schnappbefestigungsmittel (232) aufweist, die mit komplementären Mitteln (236) des Bauteils (216) zusammenwirken, wobei das Verfahren die folgenden Schritte umfasst:
- Befestigen zumindest eines Metallbolzens (272) an einer Seitenwand (234) der Verstärkung (230) und zumindest eines weiteren Metallbolzens (272) an der anderen Seitenwand (234) der Verstärkung (230), wobei sich diese Bolzen (272) im Wesentlichen senkrecht zu den Seitenwänden (234) erstrecken, an denen sie befestigt sind,
- Bewegen der Bolzen (272) voneinander weg, um die Seitenwände (234) der Verstärkung (230) zu spreizen und ihre Schnappbefestigungsmittel (232) von den komplementären Mitteln (236) des Bauteils zu lösen, und
- Entfernen der Verstärkung (230) von dem Bauteil (216).

2. Demontageverfahren nach Anspruch 1,
**dadurch gekennzeichnet, dass**
die Bolzen (272) durch Verschweißen an der Verstärkung (230) befestigt werden, wobei die Bolzen (272) als Schweißelektroden zum Verschweißen verwendet werden, bei dem zumindest ein Lichtbogen zwischen der Verstärkung (230) und dem Ende jedes Bolzens (272) erzeugt werden soll, um dieses Ende oder ein Zusatzmetall zu schmelzen, wobei das Schmelzmetall (274) die Befestigung des Bolzens (272) an der Verstärkung (230) sicherstellt.

3. Demontageverfahren nach Anspruch 1 oder 2,
**dadurch gekennzeichnet, dass**
die Bolzen (272) jeweils an den Enden der beiden Schenkel (270) einer Zange (252) befestigt sind, mit der die Bolzen (272) voneinander weg bewegt werden können.

4. Demontageverfahren nach einem der Ansprüche 1 bis 3,
**dadurch gekennzeichnet, dass**
das Bauteil eine Turbomaschinen- bzw. Turbotriebwerksschaufel (216) ist, die ein Schaufelblatt und zumindest eine Verstärkung (230) einer Kante der Schaufel, insbesondere ihrer Vorderkante und/oder ihrer Hinterkante, umfasst, wobei die bzw. jede Verstärkung (230) die vorgenannte Kante der Schaufel bedeckt bzw. bildet und sich im Wesentlichen über die gesamte Längsabmessung dieser Kante erstreckt, wobei die Verstärkung (230) abnehmbar an dem Schaufelblatt befestigt ist und elastische Einschnappbefestigungsmittel (232) aufweist, die mit komplementären Mitteln (236) des Schaufelblatts zusammenwirken.

5. Werkzeuganordnung zum Durchführen des Verfahrens nach einem der Ansprüche 2 bis 4,
**dadurch gekennzeichnet, dass**
sie ein zangenartiges Werkzeug (252) mit Schenkeln (270) enthält, deren freie Enden Bolzen (272) tragen, die dazu bestimmt sind, durch Verschweißen an den Seitenwänden (234) der Verstärkung (230) befestigt zu werden, wobei jeder Bolzen (272) durch einen Leiter (276) mit einem Anschluss einer elektrischen Quelle verbunden ist.

6. Werkzeuganordnung nach Anspruch 5,
**dadurch gekennzeichnet, dass**
die Bolzen (272) abnehmbar an den Schenkeln (270) des Werkzeugs (252) befestigt sind.

7. Werkzeuganordnung nach Anspruch 6,
**dadurch gekennzeichnet, dass**
jeder Schenkel (270) des Werkzeugs (252) ein zylindrisches Ende mit einer axialen Bohrung aufweist, in die der Körper eines Bolzens (272) eingreift.

8. Werkzeuganordnung nach Anspruch 7,
**dadurch gekennzeichnet, dass**
jedes zylindrische Ende eine Gewindeöffnung aufweist, die in das Innere der Bohrung mündet und in der eine Schraube (280) zur axialen Sicherung des Bolzens (272) in dieser Bohrung angebracht ist.

9. Werkzeuganordnung nach einem der Ansprüche 5 bis 8,
**dadurch gekennzeichnet, dass**
die Bolzen (272) aus schmelzbarem Material hergestellt sind.

## Claims

1. A disassembly method for disassembling a piece of reinforcement (230) from a part (216), said reinforcement (230) being releasably fastened on the part (216) and including resilient snap-fastener means (232) co-operating with complementary means (236) of the part (216), the method comprising the steps consisting in:
• fastening at least one metal stud (272) on one side wall (234) of the reinforcement (230) and at least one other metal stud (272) on the other side wall (234) of the reinforcement (230), these studs (272) extending substantially perpendicularly to the side walls (232) on which they are fastened;
• moving the studs (272) apart from each other in order to space apart the side walls (234) of the reinforcement (230) and disengaging their snap-fastener means (232) from the complementary means (236) of the part; and
• removing the reinforcement (230) from the part (216).

2. A disassembly method according to claim 1, **characterized in that** the studs (272) are fastened to the reinforcement (230) by welding, the studs (272) being used as electrodes for the welding during which at least one electric arc is to be generated between the reinforcement (230) and the end of each stud (272) in order to melt said end or to melt a filler metal, the molten metal (274) serving to fasten the stud (272) to the reinforcement (230).

3. A disassembly method according to claim 1 or claim 2, **characterized in that** the studs (272) are fastened respectively to the ends of two branches (270) of a pair of pliers (252) that is used for spacing the studs (272) apart from each other.

4. A disassembly method according to any one of claims 1 to 3, **characterized in that** the part is a turbine engine vane (216) or blade, comprising an airfoil and a piece of reinforcement (230) on at least one edge of the airfoil, and in particular on the leading edge and/or on the trailing edge of the airfoil, the or each piece of reinforcement (230) covering or forming the above-mentioned edge of the airfoil and extending substantially over the entire longitudinal dimension of that edge, the reinforcement (230) being releasably fastened on the airfoil and including resilient snap-fastener means (232) co-operating with complementary means (236) of the airfoil.

5. Tooling for performing the method according to any one of claims 2 to 4, **characterized in that** it comprises a tool (252) in the form of a pair of pliers, having branches (270) with free ends carrying studs (272) that are to be fastened by welding to the side walls (234) of the reinforcement (230), each stud (272) being connected by a conductor (276) to a terminal of an electrical power supply.

6. Tooling according to claim 5, **characterized in that** the studs (272) are releasably fastened to the branches (270) of the tool (252).

7. Tooling according to claim 6, **characterized in that** each branch (270) of the tool (252) has a cylindrical end including an axial bore in which the body of a stud (272) is engaged.

8. Tooling according to claim 7, **characterized in that** each cylindrical end includes a tapped orifice opening into the inside of the bore and having a lock screw (280) mounted therein to prevent the stud (272) from moving axially in the bore.

9. Tooling according to any one of claims 5 to 8, **characterized in that** the studs (272) are made of meltable material.
